(19) Europäisches Patentamt

European Patent Office

Office européen des brevets

(11) **EP 0 718 249 A1**

(12) **EUROPEAN PATENT APPLICATION**

(43) Date of publication:
26.06.1996 Bulletin 1996/26

(51) Int. Cl.$^6$: **C03C 14/00**

(21) Application number: **95118751.7**

(22) Date of filing: **29.11.1995**

| | |
|---|---|
| (84) Designated Contracting States:<br>**DE FR GB**<br><br>(30) Priority: **29.11.1994 JP 317758/94**<br>**24.04.1995 JP 120425/95**<br>**24.04.1995 JP 120426/95**<br>**24.04.1995 JP 120427/95**<br>**03.07.1995 JP 187678/95**<br><br>(71) Applicant: **UBE INDUSTRIES, LTD.**<br>**Ube-shi, Yamaguchi-ken 755 (JP)** | (72) Inventors:<br>• **Waku, Yoshiharu**<br>  **Ube-shi, Yamaguchi (JP)**<br>• **Suzuki, Michiyuki**<br>  **Ube-shi, Yamaguchi (JP)**<br>• **Oda, Yoshihiko**<br>  **Ube-shi, Yamaguchi (JP)**<br>• **Kohtoku, Yasuhiko**<br>  **Ube-shi, Yamaguchi (JP)**<br><br>(74) Representative: **Hoeger, Stellrecht & Partner**<br>**Uhlandstrasse 14 c**<br>**70182 Stuttgart (DE)** |

(54) **High strength and high toughness glass matrix composite, glass composite powder therefor, and processes for preparing the same**

(57) A high toughness composite glass comprises an oxide-based glass matrix with a flaky ductile metal reinforcing phase and with an optional reinforcing phase of a metal ceramic powder, a ceramic whisker material and/or an inorganic cut fiber. The composite ceramic may be prepared by mixing an oxide-based glass powder with ductile metal powder, and optionally, with metal powder, ceramic powder, a ceramic whisker material and/or an inorganic cut fiber to form a composite powder comprising an oxide-based glass powder adhered onto the surface of the flaky ductile metal powder, followed by sintering the same at 200 to 1800°C.

Fig. 1

## Description

## BACKGROUND OF THE INVENTION

### 1. Field of the Invention

The present invention relates to a high strength and high toughness glass matrix composite which can be used as a structural member at a temperature in a range of up to about 1000°C, a process for preparing the same, a starting powder for obtaining the same by sintering, and a process for preparing the starting powder.

### 2. Description of the Related Art

Glasses have been put into practical use as engineering ceramics, but there are obstacles for glasses to be used as structural members because of their insufficient strength and toughness.

To solve the above problems, composites of oxide-based glass have been investigated to improve the mechanical properties thereof, particularly the toughness and the strength. In general, composites with whiskers or particles of ceramics (for example, Japanese Unexamined Patent Publication (Kokai) No. 63-282131) and composites with continuous fibers (for example, Japanese Unexamined Patent Publication (Kokai) No. 56-169152) have been investigated.

In accordance with the above prior art technology, the mechanical properties have been improved in each case. It was reported for the case of using whiskers that a composite of boron silicate glass matrix reinforced with various SiC whisker at 20 vol% had a bending strength of 12 to 18 kg/mm$^2$ and a fracture toughness of 3.8 to 5.5 MPam$^{1/2}$ (Ceram. Eng. Sci. Proc., 7(7-8) (1986) 978).

It was also reported for the case of using continuous fibers that a composite of LAS glass matrix unidirectionally reinforced with SiC fiber at 44 vol% had a bending strength of 65 kg/mm$^2$ and a fracture toughness of 17 MPam$^{1/2}$ in the direction of the fiber, but a similar composite of 0°/90° lamination for compensation of the strength in the direction normal to the fiber had only a bending strength of about 35 kg/mm$^2$ and a fracture toughness of 9 MPam$^{1/2}$ (Amer. Ceram. Soc. Bull., 65 (1986) 305).

Thus, it is understood that the whisker-reinforced glass composite has insufficient strength and toughness for use as a structural member. The continuous fiber-reinforced glass composite exhibits excellent strength and toughness in the fiber direction but, when the lamination pattern is changed to improve the strength in the direction normal to the fiber, the strength and toughness are significantly reduced. Moreover, in practical use, the stresses and shapes are complicated and, therefore, a unidirectionally reinforced composite is difficult to use and the above properties cannot be relied on. Further, continuous fibers are expensive and processes for making a composite using the same are complex, making the product cost high. It is therefore difficult to use the continuous fiber-reinforced glass composite as a common engineering material.

The object of the present invention is to solve the above problems and to provide a high toughness glass matrix composite suitable as a structural material, a process for preparing the same and a starting powder for obtaining the same by sintering.

## SUMMARY OF THE INVENTION

In accordance with a first aspect of the present invention, there are provided a high toughness glass matrix composite wherein a matrix comprises an oxide-based glass and a reinforcing phase comprises a flaky ductile metal (a first embodiment of the first aspect), a high toughness glass matrix composite wherein a matrix comprises an oxide-based glass and a reinforcing phase comprises a flaky ductile metal and a particulate metal (a second embodiment of the first aspect), a high toughness glass matrix composite wherein a matrix comprises an oxide-based glass and a reinforcing phase comprises a flaky ductile metal and a particulate ceramic (a third embodiment of the first aspect), and a high toughness glass matrix composite wherein a matrix comprises an oxide-based glass and a reinforcing phase comprises a flaky ductile metal and a ceramic whisker and/or an inorganic cut fiber (the fourth embodiment of the first aspect). The reinforcing phase may comprise the flaky ductile metal and two or more of the particulate metal, particulate ceramic, and ceramic whisker and/or inorganic cut fiber.

Also, in accordance with the second aspect of the present invention, the above high toughness glass matrix composite (of the first embodiment of the first aspect of the present invention) is prepared by providing a glass composite powder comprising an oxide-based glass powder adhered onto a surface of flaky ductile metal powder, forming said glass composite powder into a shaped body, and sintering the resultant shaped body at a temperature of 200 to 1800°C to form a sintered glass matrix composite comprising the oxide-based glass as a matrix and the flaky ductile metal as a reinforcing phase. The glass composite powder may be obtained in accordance with the third aspect of the present invention by mixing an oxide-based glass powder and a ductile metal powder, so that the ductile metal powder is subjected to plastic deformation into a flaky shape (the first embodiment of the third aspect of the present invention).

Similarly, the other high toughness glass matrix composites of the second to fifth embodiments of the first aspect of the present invention may be prepared by the above process, provided that a glass composite powder comprising an oxide-based glass powder and at least one of a particulate metal powder, a particulate ceramic powder, a ceramic whisker and an inorganic cut fiber is prepared and used (the second to fifth embodiments of the second aspect). These glass composite powders may be also prepared by mixing a ductile metal powder with an oxide-based glass powder and at least one of a particulate metal powder, a particulate ceramic powder, a ceramic whisker and an inorganic cut fiber, so that the ductile metal powder is subjected to plastic deformation into a flaky shape (the second to fifth embodiments of the fourth aspect of the present invention).

BRIEF DESCRIPTION OF THE DRAWINGS

Fig. 1 is a scanning electron micrograph of a mixed powder of an oxide-based glass powder and a flaky ductile metal powder after milling in Example 1;

Fig. 2 is an optical photomicrograph of a cross-section of the mixed powder after milling in Example 1;

Fig. 3 shows a cross-section of the resultant sintered composite resultant from the mixed powder of Figs. 1 and 2, in the plane parallel to the pressing direction, obtained by optical microscopy;

Fig. 4 shows the fracture toughness of the composites in relation to d/t in Example 2;

Fig. 5 is a scanning electron micrograph of a mixed powder of an oxide-based glass powder, a metal powder, and a ductile metal powder after milling in Example 4;

Fig. 6 is an optical micrograph of a section of the mixed powder of an oxide-based glass powder, a metal powder and a ductile metal powder after milling in Example 9;

Fig. 7 shows a section of the resultant sintered composite resultant from the mixed powder of Figs. 5 and 6, in the plane parallel to the pressing direction, obtained by optical microscopy;

Fig. 8 shows the fracture toughness of the composites in relation with d/t in Example 10;

Fig. 9 is a scanning electron micrograph of a mixed powder of an oxide-based glass powder, a ceramic powder and a ductile metal powder after milling in Example 17;

Fig. 10 is an optical photomicrograph of a section of a mixed powder of an oxide-based glass powder, a ceramic powder and a ductile metal powder after milling in Example 17;

Fig. 11 shows a section of the sintered composite obtained from the mixed powder of Figs. 9 and 10 in the plane parallel to the pressing direction obtained by optical microscopy;

Fig. 12 shows the fracture toughness of the resultant composites in relation with d/t in Example 18;

Fig. 13 is a scanning electron micrograph of a mixed powder of an oxide-based glass powder, ceramic whisker and a ductile metal powder after milling in Example 25;

Fig. 14 is an optical photomicrograph of a section of a mixed powder of an oxide-based glass powder, a ceramic whisker and a ductile metal powder after milling in Example 25;

Fig. 15 shows a section of the sintered composite obtained from the mixed powder of Figs. 13 and 14 in the plane parallel to the pressing direction obtained by optical microscopy;

Fig. 16 shows a section of the sintered composite obtained from the mixed powder of Figs. 13 and 14 in the pressed plane or the plane perpendicular to the pressing direction obtained by an optical microscopy; and

Fig. 17 shows the fracture toughness of the resultant composites in relation with d/t in Example 26.

DESCRIPTION OF THE PREFERRED EMBODIMENTS

The oxide-based glass as the matrix of the glass matrix composite of the present invention is not particularly limited and may be one or more oxide-based glasses selected from crystallized glasses, common glasses, etc.

More specifically, mentioned as the crystallized glass are LAS I ($Li_2O-Al_2O_3-SiO_2-MgO$ system), LAS II, and III ($Li_2O-Al_2O_3-SiO_2-MgO-Nb_2O_5$ system), MAS ($MgO-Al_2O_3-SiO_2$ system), BMAS ($BaO-MgO-Al_2O_3-SiO_2$ system), Ternary mullite ($BaO-Al_2O_3-SiO_2$ system), Hexacelsian ($BaO-Al_2O_3-SiO_2$ system), $Li_2O-Al_2O_3-SiO_2$ system, $Na_2O-Al_2O_3-SiO_2$ system, $Na_2O-CaO-MgO-SiO_2$ system, $PbO-ZnO-B_2O_3$ system, $ZnO-B_2O_3-SiO_2$ system, $ZrO_2-SiO_2$ system, $CaO-Y_2O_3-Al_2O_3-SiO_2$ system, $CaO-Al_2O_3-SiO_2$ system, $MgO-CaO-Al_2O_3-SiO_2$ system, $SiO_2-B_2O_3-Al_2O_3-MgO-K_2O-F$ system, etc. Mentioned as the common glass are silicate glass ($SiO_2$ system), sodium lime glass ($Na_2O-CaO-SiO_2$ system), pottasium lime glass ($K_2O-CaO-SiO_2$ system), borosilicate glass ($Na_2O-B_2O_3-SiO_2$ system), aluminosilicate glass ($Al_2O_3-MgO-CaO-SiO_2$ system), lead glass ($K_2O-PbO-SiO_2$ system), barrium glass ($BaO-SiO_2-B_2O_3$ system), etc. Mentioned as low melting point glass are lead silicate glass ($PbO-SiO_2$ system, $PbO-B_2O_3-SiO_2$ system, etc.), borate glass ($B_2O_3$ system, $Li_2O-B_2O_3$ system, $Na_2O-B_2O_3$ system, etc.), phosphate glass ($Na_2O-P_2O_5$ system, $B_2O_3-P_2O_5$ system, etc.), $Al_2O_3-Li_2O-Na_2O-K_2O-P_2O_5$ system, etc. Further, recently developed $Y_2O_3-Al_2O_3-SiO_2$ system glass, oxynitride glass (La-Si-O-N system, Ca-Al-Si-O-N system, Y-Al-Si-O-N system, Na-Si-O-N system, Na-La-Si-O-N system, Mg-Al-Si-O-N system, Si-O-N system, Li-K-Al-Si-O-N system), and low thermal expansion coeficient $TiO_2-SiO_2$ system and $Cu_2O-Al_2O_3,-SiO_2$ system glass, etc. may be mentioned.

The flaky and particulate metals as the reinforcing phase may be at least one metal selected from Ti, V, Cr, Zr, Nb, Mo, Hf, Ta, W, Fe, Ni, Co, Cu, Al, Mg, Zn and alloys thereof, stainless steel and super alloys such as Mar-M, MM, TRW, Udimet, PWA, Nimonic Waspaloy, TMS, Incolony, Haynes, Hustelloy, Inconel, IN. The metals of the flaky and particulate metals may be the same or different.

The ceramic as the reinforcing phase may be at least one ceramic selected from oxides, nitrides, carbides, borates, silicides and carbonitrides of Ti, V, Cr, Zr, Nb, Mo, Hf, Ta, W, Fe, Ni, Co, Al, Y, Si and B and is one which is not the same as the matrix ceramic powder. It is important to select a ceramic which does not form brittle compounds by reacting with the ductile metal at the sintering temperature.

The ceramic whisker as the reinforcing phase may be at least one type of ceramic whisker selected from whiskers of $Si_3N_4$, SiC, TiC, graphite, potassium titanate, aluminum borate, ZnO, MgO, magnesium borate, $TiB_2$, mullite, etc.

The inorganic cut fiber as the reinforcing phase may be at least one cut fiber obtained by chopping continuous inorganic fibers of alumina, $Si_3N_4$, SiC, Si-Ti-C-O system, etc., or cut or short fibers of alumina, aluminosilica, silica, zirconia, etc.

It is important to select a ceramic whisker and/or inorganic cut fiber which does not form brittle compounds by reacting with the ductile metal at the sintering temperature.

The combination of the matrix and the ductile metal should be such that the ductile metal has a melting point higher than the sintering temperature of the matrix, so as to maintain the shape of the flaky metal during the sintering.

For example, in the case where the matrix is silicate glass or $TiO_2$-$SiO_2$ system, it is preferred to use at least one of the metals V, Cr, Zr, Nb, Mo, Hf, Ta or W, which has a melting point higher than 1600°C on the temperature at which the silicate glass or $Tio_2$-$SiO_2$ glass is sintered. If the matrix is an oxynitride glass or a crystallized glass, except for PbO-ZnO-$B_2O_3$ system, whose sintering and crystallizing temperatures are about 700 to 1300°C, Ti, Fe, Co, stainless steel and super alloys in addition to the above-mentioned metals may be used. Further in the case in which the matrix is a common glass, where the sintering temperature is about 600 to 1000 °C, Cu may also be used. Moreover, in the case in which the matrix is PbO-ZnO-$B_2O_3$ system crystallized glass or a low melting point glass whose sintering temperature is about 200 to 600°C, Al, Mg, Zn and alloys thereof may be used.

In accordance with the present invention, a high toughness can be given to the oxide-based glass material by utilizing a flaky metal reinforcing phase. It is preferred that d/t $\geq$ 3 be satisfied wherein d stands for the minimum size of the metal particle in the main plane of the flaky particle and t stands for the thickness of the flaky metal particle. If d/t is less than 3, cracks progress along the interfaces between the metal particles and the matrix and, as the plastic deformation of the metal phase is not sufficiently utilized, it is not preferred. The thickness t of the flaky metal reinforcing particles is preferably 0.5 $\mu$m or more. If it is lower than 0.5 $\mu$m, the effect of plastic deformation is not obtained. The size d of the flaky metal particle is not particularly limited as long as d/t $\geq$ 3 is satisfied.

Also, addition of particulate metal and/or particulate ceramic as an additional reinforcing phase allows attainment of a high strength of the composite by the particle dispersion effect. It is preferred that the particulate metal and/or particulate ceramic have a particle size of 2 $\mu$m or less, more preferably 1 $\mu$m or less. If the particle size of the particulate metal or ceramic is larger than 2 $\mu$m, the effect of particle dispersion does not exist or is negligible.

Further, addition of ceramic whisker and/or inorganic cut fiber as an additional reinforcing phase allows improved strength and toughness of the oxide-based glass matrix, to thereby improve the strength and toughness of the composite.

It is preferred that the reinforcing phase of the flaky metal particles occupy 2 to 60% by volume, more preferably 10 to 50% by volume of the glass matrix composite. If the volume percent of the reinforcing phase of the flaky metal particles is less than 2%, the amount of the plastic deformation of the metal reinforcing phase is too low and the toughness is not sufficiently improved. If the volume percent of the reinforcing phase of the flaky metal particles is more than 60%, the hardness and the heat resistance of the composite are lowered so that it is not practically useful.

The volume percent of the particulate metal or the particulate ceramic as the reinforcing phase is preferably 2 to 40% by volume, more preferably 3 to 30%. If the volume percent is lower than 2%, the effect of particle dispersion is not obtained. Even if the volume percent exceeds 40%, the strength of the composite does not increase further. The total volume percent of the particulate metal and ceramic as the reinforcing phase, if used, is also preferably 2 to 40%, more preferably 3 to 30%.

The volume percent of the ceramic whisker and/or the inorganic cut fiber as the reinforcing phase is preferably 2 to 40% by volume, more preferably 3 to 30%,. If the volume percent is lower than 2%, the effect of addition does not noticeable. Even if the volume percent exceeds 40%, further improvement of the mechanical properties is not obtained.

The total volume percent of the flaky ductile metal and at least one of the particulate metal, particulate ceramic, ceramic whisker and inorganic cut fiber as the reinforcing phase is preferably up to 80% by volume. Even if the total volume percent of the reinforcing phase exceeds 80%, the effect thereof does not increase and it is not economical.

The high toughness glass matrix composite or the high strength and high toughness glass matrix composite of the present invention is prepared by the following process.

First, a glass composite powder comprising an oxide ceramic-based glass powder, optionally with particulate metal, particulate ceramic powder, ceramic whisker and/or inorganic cut fiber adhered onto the surface of flaky ductile metal powder is prepared.

The above composite powder may be obtained by mixing a ductile metal powder and an oxide-based glass powder, optionally with a particulate metal powder, a particulate ceramic powder, ceramic whisker and/or inorganic cut fiber, so that the ductile metal powder is subjected to plastic deformation into a flaky shape.

The particle size of the oxide-based glass powder for the matrix phase is not particularly limited but preferably the average particle size thereof is 50 μm or less.

The particle size of the ductile metal powder is preferably 1 to 200 μm, more preferably 3 to 100 μm, to allow easy deformation into a flaky shape. If the particle size of the ductile metal powder is smaller than 1 μm, it is difficult to deform the powder into a flaky shape since it is too fine. If the particle size is larger than 200 μm, sintering is difficult and separation of the ductile metal powder and the oxide-based glass powder becomes so significant that uniform mixing is difficult.

The particle size of the particulate metal powder and/or particulate ceramic powder is preferably 2 μm or less, more preferably 1 μm or less. If the particle size of the particulate metal matrix is larger than 2 μm, the effect of particule dispersion does not exit or is negligible.

The shape of the ceramic whisker is not particularly limited and commercially available ceramic whiskers may be used. The inorganic cut fiber preferably has a length of 5 mm or less for easy handling and dispersibility.

The mixing ratio between the ductile metal powder and the matrix oxide-based glass powder is preferably such that the ductile metal particles occupy 2 to 60% by volume, more preferably 10 to 50% by volume, of the mixture.

When the ductile metal powder and the oxide-based glass powder and a particulate metal powder, a particulate ceramic powder, a ceramic whisker and/or inorganic cut fiber are mixed, the amount of the particulate metal powder, if any, is preferably 2 to 40% by volume, more preferably 3 to 30% by volume, the amount of the particulate ceramic powder, if any, is preferably 2 to 40% by volume, more preferably 3 to 30% by volume, the amount of the ceramic whisker and/or inorganic cut fiber, if any, is preferably 2 to 40% by volume, more preferably 3 to 30% by volume, and the total amount of the particulate metal powder, particulate ceramic powder, ceramic whisker and inorganic cut fiber is preferably 2 to 40% by volume, more preferably 3 to 30% by volume. The total volume percent of the reinforcing phase is preferably up to 80% by volume.

The mixing of the ductile metal powder and the oxide-based glass powder, optionally with a particulate metal powder, a particulate ceramic powder, ceramic whisker and/or inorganic cut fiber, is not particularly limited but may be conducted by either wet or dry mixing. In the wet mixing, the medium is usually ethanol, methanol, etc. The mixing machine may be a ball mill, a vibration mill, an attritor, a planetary-type ball mill, etc.

During the mixing, the ductile metal powder is deformed from a near-spherical shape to a flaky shape by mechanical mixing with a mixing medium such as balls. Accordingly, the flaky shape may be controlled by selecting the mixing conditions. The degree of deformation depends on the conditions such as mixing time and rotation speed. It is therefore desired that the mixing conditions be controlled such that the deformed flaky metal powder satisfies d/t ≧ 3.

Further, during this mixing, an oxide-based glass powder, optionally with a particulate metal, a particulate ceramic powder, a ceramic whisker and/or an inorganic cut fiber, be adhered onto the surface of the flaky ductile metal powder, which prevents the ductile metal powder particles from contacting each other and from agglomeration during the sintering process. Depending on the mixing ratio between the ductile metal powder and the oxide-based glass powder and, if any, a particulate metal powder, a particulate ceramic powder, a ceramic whisker and/or an inorganic cut fiber, there may exist oxide-based glass powder and, a particulate metal powder, a particulate ceramic powder, a ceramic whisker an/or an inorganic cut fiber, which does not adhere to the surface of the flaky ductile metal powder. Also, depending on the particle size of the ductile metal powder, undeformed ductile metal powder may remain after the mixing. In either case, an improvement in toughness is obtained as long as an appropriate amount of flaky ductile metal powder is included in the starting material or in the composite.

The glass composite powder comprising an oxide-based glass powder, optionally with a particulate metal powder, a particulate ceramic powder, a ceramic whisker and/or an inorganic cut fiber, adhered onto the surface of flaky ductile metal powder may be also obtained by first forming a ductile metal powder into a flaky shape followed by mixing the resultant flaky ductile metal powder with an oxide-based glass powder, and optionally a particulate metal powder, a particulate ceramic powder, a ceramic whisker and/or inorganic cut fiber. However, the method of simultaneous mixing and deforming into a flaky shape as described before is preferable since it is simple and it allows a uniform mixing.

The resultant mixture is formed into a desired shape and sintered in an inert gas atmosphere such as nitrogen or argon or a vacuum at 200 to 1800°C.

The method of sintering may be any of the known sintering methods. For example, when a CIPed body or a body prepared by injection molding is densified by pressureless sintering or vacuum sintering before HIPing, or by HIPing, the direction of the flaky ductile metal particles in the sintered body is three dimensionally random, but when the material is formed and sintered under a uni-directional pressure by hot press, the flaky ductile metal particles in the sintered body are aligned two dimensionally in a direction perpendicular to the pressing direction, by which anisotropy of the properties, particularly the toughness, of the sintered body may be provided.

Extrusion, rolling and other forming methods may be used to form an elongated shape. Further, casting, preferably pressure casting may be used to form a complicated shape.

The sintering may be conducted at a temperature in a range of 200 to 1800°C but the temperature should be lower than the melting point of the ductile metal to maintain the flaky shape of the ductile metal particles.

In accordance with the present invention, since the reinforcing phase is flaky metal particles, the phenomena of cracks proceeding along the interfaces between reinforcing spherical particles and the matrix can be prevented. That is, the toughness is sufficiently improved by utilizing the plastic deformation of the metal particles. Even if cracks proceed along the interfaces between the reinforcing particles and the matrix, since the reinforcing metal particles are not near-spherical, the direction of the proceeding cracks is deflected along the flaky metal particles which contributes to a higher toughness. Thus, in accordance with the present invention, glass matrix composites applicable to high toughness structural members can be obtained.

Moreover, when a particulate metal and/or a particulate ceramic powder as the reinforcing phase are additionally used, the oxide-based glass matrix is reinforced in strength by the particle dispersion effect, so that the strength of the composite is additionally improved. When a ceramic whisker and/or an inorganic cut fiber as the reinforcing phase are additionally used, the strength and the toughness of the glass matrix is improved so that the strength and toughness of the composite are further improved.

Also, if a particulate metal powder, a particulate ceramic powder, a ceramic whisker and/or an inorganic cut fiber having a thermal expansion coefficient significantly different from that of the oxide-based glass matrix are used, residual stress obtained in the composite by thermal stress generated during the sintering provides an increase in the strength of the composite, so that a glass matrix composite applicable to a high strength and high toughness structural member can be obtained.

If the reinforcing flaky phase is aligned or arranged two dimensionally, as described before, the toughness of the composite in the direction perpendicular to the aligned or arranged direction can be further improved.

Further, the degree of deformation of the reinforcing ductile metal powder into a flaky shape may be controlled while mixing a mixture comprising a ductile metal powder and an oxide-based glass powder optionally with a particulate metal powder, a particulate ceramic powder, a ceramic whisker and/or an inorganic cut fiber by selecting the mixing conditions, which eliminates the necessity of an additional process and prevents the additional expenses for making a composite material.

EXAMPLES

Example 1

An MAS powder (MgO-Al$_2$O$_3$-SiO$_2$ system, particle size of 20 $\mu$m or less) and a Mo powder (M-60 sold by Showa Denko K.K., particle size of 53 to 10 $\mu$m) were measured and mixed to 80:20 by volume.

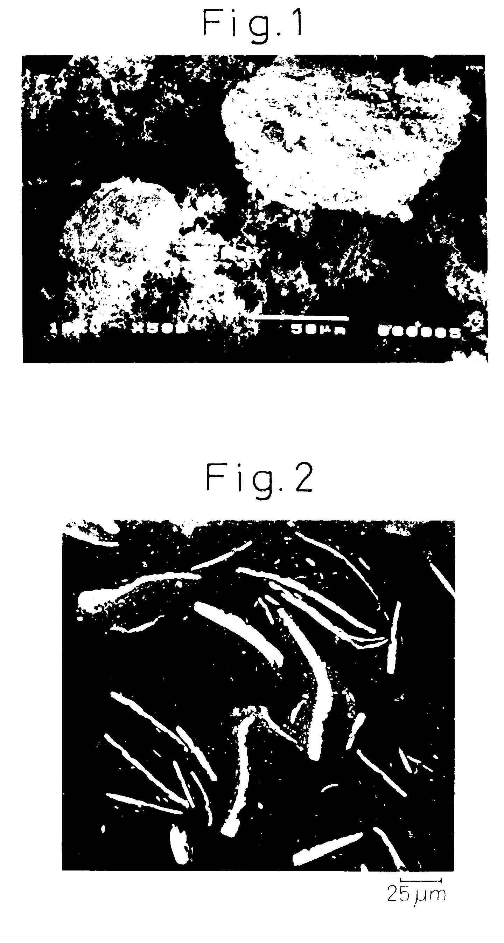

The mixture was milled, in ethanol, in a ball mill containing silicon nitride balls. Fig. 1 is a scanning electron micrograph of the mixed powder after the milling and Fig. 2 is an optical photomicrograph of a section of the mixed powder after the milling. These photographs show that the Mo powder was deformed into a flaky shape and that the glass powder adhered to the surface of the flaky Mo powder.

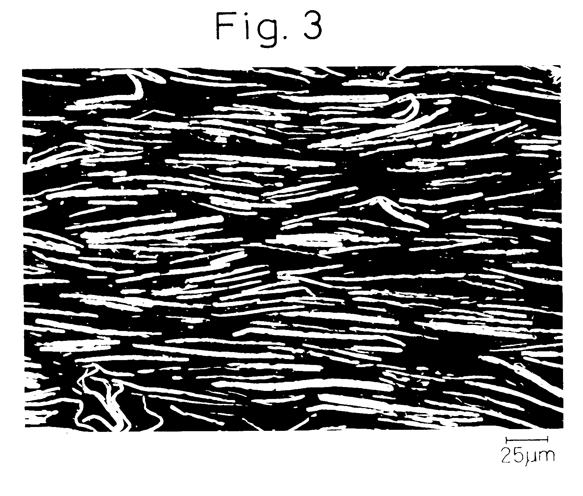

The mixed powder was charged in a graphite mold and sintered by hot pressing at 1000°C and 100 kg/cm$^2$ in argon for 1 hour. Fig. 3 shows a cross-section of the resultant sintered composite in the plane parallel to the pressing direction obtained by optical microscopy. It is seen that the reinforcing phase is aligned two dimensionally and has a flaky shape satisfying d/t $\geq$ 3.

Samples of 3 × 4 × 40 mm were taken from the composite and subjected to a three-point bending test and an SEVNB method (Single-Edge V-Notched Bean Method). The bending strength was 35 kg/mm$^2$ and the fracture toughness was 7 MPam$^{1/2}$.

Comparative Example 1

A glass body sintered in the same manner as above but using only an MAS powder (MgO-Al$_2$O$_3$-SiO$_2$ system, particle size of 20 $\mu$m or less) was tested in the same manner as above and the bending strength was 10 kg/mm$^2$ and the fracture toughness was 1.1 MPam$^{1/2}$. Thus, it is demonstrated that the bending strength and the fracture toughness of Example 1 were improved and significantly higher in comparison with the comparative sample.

Example 2

Mixture having the same composition as in Example 1 were prepared and milled under different conditions so as to obtain different d/t (definitions of d and t are the same as described before), and then the mixture was sintered under the same conditions as in Example 1.

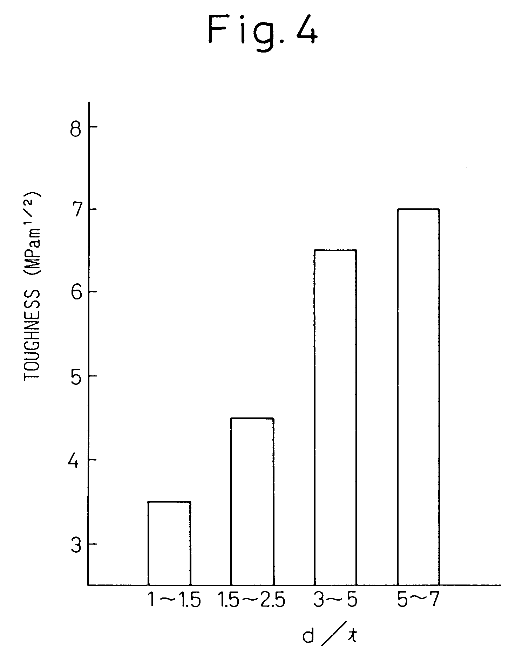

The fracture toughness of the resultant composites was measured and the results are shown in the following Table 1 and in Fig. 4. It is seen that the fracture toughness was significantly high when d/t $\geq$ 3 but, when d/t was 1.5 or less, the fracture toughness was only 3.5 MPam$^{1/2}$ which is relatively low.

Table 1

| d/t | Fracture toughness |
|---|---|
| 1 to 1.5 | 3.5 MPam$^{1/2}$ |
| 1.5 to 2.5 | 4.5 MPam$^{1/2}$ |
| 3 to 5 | 6.5 MPam$^{1/2}$ |
| 5 to 7 | 7.0 MPam$^{1/2}$ |

Example 3

An LAS I powder ($Li_2O$-$Al_2O_3$-$SiO_2$-MgO system, particle size of 20 $\mu$m or less) and a Ta powder (M-40 sold by Showa Denko K.K., particle size of 45 to 5 $\mu$m) were measured and mixed to 70:30 by volume and milled, in ethanol, in a ball mill containing silicon nitride balls.

The mixed powder was charged in a graphite-mold and sintered in the same manner as in Example 1.

The bending strength and the fracture toughness as measured as in Example 1 were found to be high and were 45 kg/mm$^2$ in the bending strength test and 9 MPam$^{1/2}$ in the fracture toughness test.

Example 4

An LAS III powder ($Li_2O$-$Al_2O_3$-$SiO_2$-MgO-$Nb_2O_3$ system particle size of 20 $\mu$m or less) and a Nb powder (sold by Ishizu Pharma, Co, Ltd., particle size of 45$\mu$m or less) were measured and mixed to 70:30 by volume and milled in ethanol in a ball mill containing silicon nitride balls.

The mixed powder was sintered as in Example 1.

The bending strength and the fracture toughness measured as in Example 1 were found to be high and were 47 kg/mm$^2$ in the bending strength test and 8.8 MPam$^{1/2}$ in the fracture toughness test.

Example 5

A soda lime glass, powder ($Na_2O$-CaO-$SiO_2$ system particle size of 45 $\mu$m or less) and a Ni alloy powder (Ni17Cr6Al10.6Y, MA-90 sold by Showa Denko K.K. particle size of 45 to 10 $\mu$m) were measured and mixed to 70:30 by volume and milled, in ethanol, in a ball mill containing silicon nitride balls.

The mixed powder was charged in a graphite mold and sintered by hot pressing at 700°C and 100 kg/cm$^2$ in argon for 1 hour.

The bending strength and the fracture toughness measured as in Example 1 were found to be high and were 35 kg/mm$^2$ in the bending strength test and 8.3 MPam$^{1/2}$ in the fracture toughness test.

Example 6

A silicate glass powder ($SiO_2$ system, particle size of 20 $\mu$m or less) and a Nb powder (sold by Ishizu Pharma Co., Ltd., particle size of 45 $\mu$m or less) were measured and mixed to 60:40 by volume and milled, in ethanol, in a ball mill containing silicon nitride balls.

The mixed powder was charged in a graphite mold and sintered by hot pressing at 1600°C and 100 kg/cm$^2$ in argon for 1 hour.

The bending strength and the fracture toughness were measured as in Example 1. The bending strength was 38 kg/mm$^2$ and the fracture toughness was 9.2 MPam$^{1/2}$.

Example 7

A aluminosilicate glass powder ($Al_2O_3$-MgO-CaO-$SiO_2$ system, particle size of 45 $\mu$m or less) and a stainless steel powder (SUS 316L sold by Sanyo Special Steels Co., Ltd., particle size of 45 $\mu$m or less) were measured and mixed to 70:30 by volume and milled, in ethanol, in a ball mill containing silicon nitride balls.

The mixed powder was charged into a graphite mold and sintered by hot pressing at 950°C and 100 kg/cm$^2$, in argon, for 1 hour.

The bending strength and the fracture toughness as measured as in Example 1 were measured and found to be 32 kg/mm$^2$ in bending strength and 7.5 MPam$^{1/2}$ in fracture toughness.

Example 8

A low temperature melting point glass powder ($Al_2O_3$-$Li_2O$-$Na_2O$-$K_2O$-$P_2O_5$ system, particle size of 45 $\mu$m or less) and an Al powder (sold by Sulzer Surface Tech Japan, Ltd., particle size of 90 to 38 $\mu$m) were measured and mixed to 80:20 by volume and milled, in ethanol, in a ball mill containing silicon nitride balls.

The mixed powder was charged into a graphite mold and sintered by hot pressing at 400°C and 100 kg/cm$^2$ in argon for 1 hour.

The bending strength and the fracture toughness as measured in the same manner as in Example 1 were measured and found to be 25 kg/mm$^2$ in bending strength and 6.3 MPam$^{1/2}$ in fracture toughness.

Example 9

An MAS powder (MgO-$Al_2O_3$-$SiO_2$ system, particle size of 20 $\mu$m or less), a Mo powder (Mo-H-D sold by Japan New Metals Co., Ltd., average particle size of 0.7 $\mu$m) and a Mo powder (M-60 sold by Showa Denko K.K., particle size of 53 to 10 $\mu$m) were measured and mixed to 70:10:20 by volume.

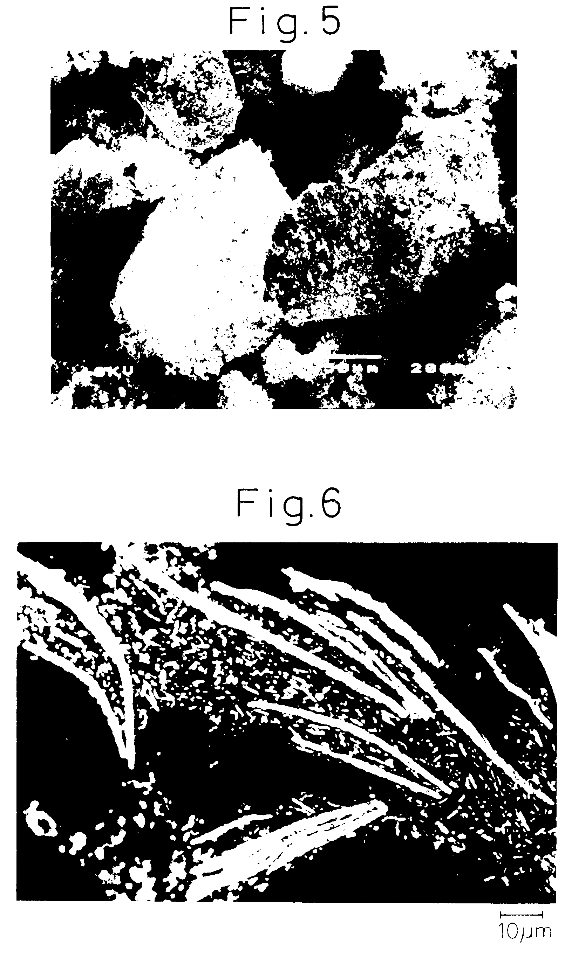

The mixture was milled, in ethanol, in a ball mill containing silicon nitride balls. Fig. 5 is a scanning electron micrograph of the mixed powder after the milling and Fig. 6 is an optical photomicrograph of a cross-section of the mixed particles after the milling. These photographs show that the Mo powder having a particle size of 53 to 10 $\mu$m was deformed into flaky shapes and the glass powder and the Mo powder with an average particle size of 0.7 $\mu$m was adhered onto the surface of the flaky Mo powder.

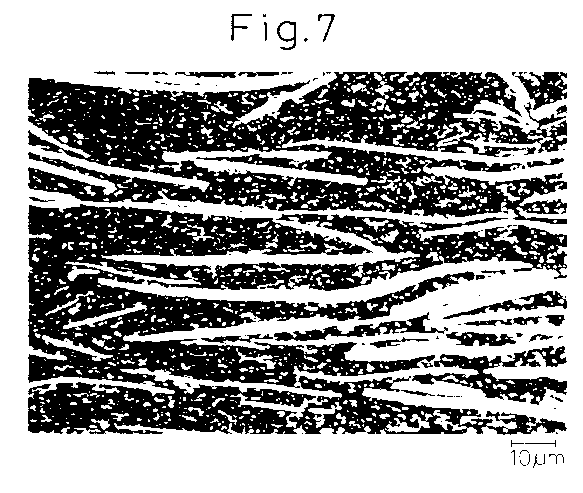

The mixed powder was charged in a graphite mold and sintered by hot pressing at 1000°C and 100 kg/cm$^2$ in argon for 1 hour. Fig. 7 shows a cross-section of the resultant sintered composite in the plane parallel to the pressing direction obtained by an optical microscopy. It is seen that the reinforcing phase obtained from the Mo metal powder with a particle size of 53 to 10 $\mu$m is aligned two dimensionally and has a flaky shape satisfying d/t $\geq$ 3, and the Mo particles with an average particle size of 0.7 μm were observed uniformly within the glass matrix.

Samples of 3 × 4 × 40 mm were taken from the composite and subjected to a three-point bending test and an SEVNB method. The bending strength was 55 kg/mm² and the fracture toughness was 8 MPam$^{1/2}$.

It is seen from comparison with Example 9 with Comparative Example 1 and Example 1 that the toughness of the composite was improved significantly by the flaky metal reinforcing phase and the strength was improved by the particulate metal phase.

Example 10

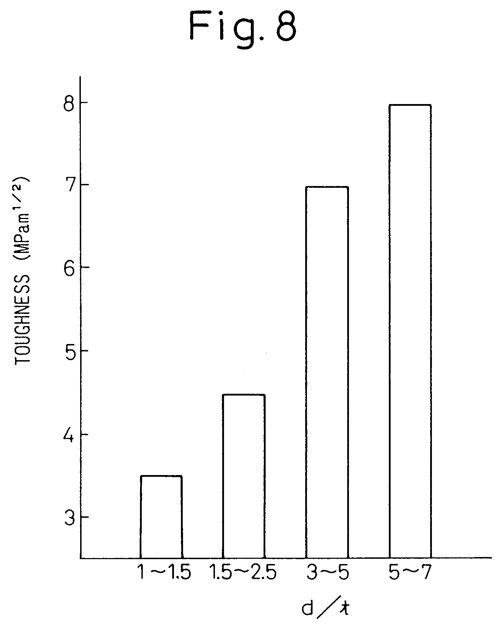

Mixture having the same composition as in Example 9 were prepared and milled in different conditions so as to obtain different d/t, and then sintered under the same conditions as in Example 9. The fracture toughnesses of the resultant composite materials were measured and are shown in the following Table 2 and in Fig. 8. It is seen that the fracture toughness was significantly high when d/t ≅ 3 but, when d/t was 1.5 or less, the fracture toughness was only 3.5 MPam$^{1/2}$ which is low.

Table 2

| d/t | Fracture toughness |
|---|---|
| 1 to 1.5 | 3.5 MPam$^{1/2}$ |
| 1.5 to 2.5 | 4.5 MPam$^{1/2}$ |
| 3 to 5 | 7.0 MPam$^{1/2}$ |
| 5 to 7 | 8.0 MPam$^{1/2}$ |

Example 11

An LAS I powder (Li$_2$O-Al$_2$O$_3$-SiO$_2$-MgO system, particle size of 20 μm or less), a W powder (WWE09PA sold by Kojundo Chemical Laboratory Co., Ltd., average particle size of 0.6 μm) and a Ta alloy powder (M-40 sold by Showa Denko K.K., particle size of 45 to 10 μm) were measured and mixed to 70:10:20 by volume and milled, in ethanol, in a ball mill containing silicon nitride balls.

The mixed powder was sintered in the same manner as in Example 9.

The bending strength and the fracture toughness measured as in Example 9 were measured and found to be 53 kg/mm² in bending strength and 8.3 MPam$^{1/2}$ in fracture toughness.

Example 12

AN LAS III powder (Li$_2$O-Al$_2$O$_3$-SiO$_2$-MgO-Nb$_2$O$_5$, system, particle size of 20 μm or less), a W powder (WWE09PA sold by Kojundo Chemicals Laboratory Co., Ltd., average particle size of 0.6 μm) and a Nb powder (sold by Ishizu Pharma Co. Ltd., particle size of 45 μm or less) were measured and mixed to 60:10:30 by volume and milled, in ethanol, in a ball mill containing silicon nitride balls. The mixed powder was sintered in the same manner as in Example 9.

The bending strength and the fracture toughness measured as in Example 9 were measured and found to be 62 kg/mm² in bending strength and 10 MPam$^{1/2}$ in fracture toughness.

Example 13

A soda lime glass (Na$_2$O-CaO-SiO$_2$ system particle size of 45 μm or less), a particulate Mo powder (Mo-H-D sold by Japan New Metals Co., Ltd., average particle size of 0.7 μm) and a Ni alloy powder (Ni15Cr6Al10.6Y, MA 90 sold by Showa Denko K.K., particle size of 45 to 10 μm) were measured and mixed to 60:10:30 by volume and milled, in ethanol, in a ball mill containing silicon nitride balls.

The mixed powder was charged in a graphite mold and sintered by hot pressing at 700°C and 100 kg/cm² in argon for 1 hour.

The bending strength and the fracture toughness measured as in Example 9 were measured and found to be 55 kg/mm² in bending strength and 9 MPam$^{1/2}$ in fracture toughness.

Example 14

A silicate glass powder (SiO$_2$ system particle size of 20 μm or less), a W powder (WWE09PA sold by Kojundo Chemical Laboratory Co. Ltd., average particle size of 0.6 μm) and a Nb powder (sold by Ishizu Pharmaceutics, particle size of 45 μm or less) were measured and mixed to 65:10:25 by volume and milled, in ethanol, in a ball mill containing silicon nitride balls.

The mixed powder were charged into a graphite mold and sintered by hot pressing at 1600°C and 100 kg/cm² in argon for 1 hour.

The bending strength and the fracture toughness as measured as in Example 9 were measured and found to be 53 kg/mm² in bending strength and 8 MPam$^{1/2}$ in fracture toughness.

Example 15

An aluminosilicate glass powder (Al$_2$O$_3$-MgO-CaO-SiO$_2$ system, particle size of 45 μm or less) and a W powder (WWE09PA sold by Kojundo Chemical Laboratory Co. Ltd., average particle size 0.6 μm) and a stainless steel powder (SUS316L sold by Sanyo Special Steels K.K., particle size of 45 μm or less) were measured and mixed to 60:10:30 by volume.

The mixture was milled, in ethanol, in a ball mill containing silicon nitride balls.

The mixed powder were charged into a graphite mold and sintered by hot pressing at 950°C and 100 kg/cm² in argon for 1 hour.

The bending strength and the fracture toughness were measured as in Example 9 to be high, 57 kg/mm$^2$ and 8.5 MPam$^{1/2}$, respectively.

### Example 16

A low melting point glass powder ($Al_2O_3$-$Li_2O$-$Na_2O$-$K_2O$-$P_2O_5$ system, particle size of 45 μm or less), a Mo powder (Mo-H-D sold by Japan New Metals Co. Ltd., average particle size of 0.7 μm) and an Al powder (sold by Sulzer Surface Tech Japan, particle size of 90 to 38 μm) were measured and mixed to 70:10:20 by volume and milled, in ethanol, in a ball mill containing silicon nitride balls.

The mixed powder was charged into a graphite mold and sintered by hot pressing at 400°C and 100 kg/cm$^2$ in argon for 1 hour.

The bending strength and the fracture toughness as measured as in Example 9 were measured to be 40 kg/mm$^2$ and 7 MPam$^{1/2}$ respectively.

### Example 17

An MAS powder (MgO-$Al_2O_3$-$SiO_2$ system, particle size of 20 μm or less), a TiC powder (TiC-007 sold by Japan New Metals Co., Ltd., particle size 0.6 to 0.9 μm) and a Mo powder (sold by Japan Plansee, average particle size 9.3 μm) were measured and mixed to 75:5:20 by volume.

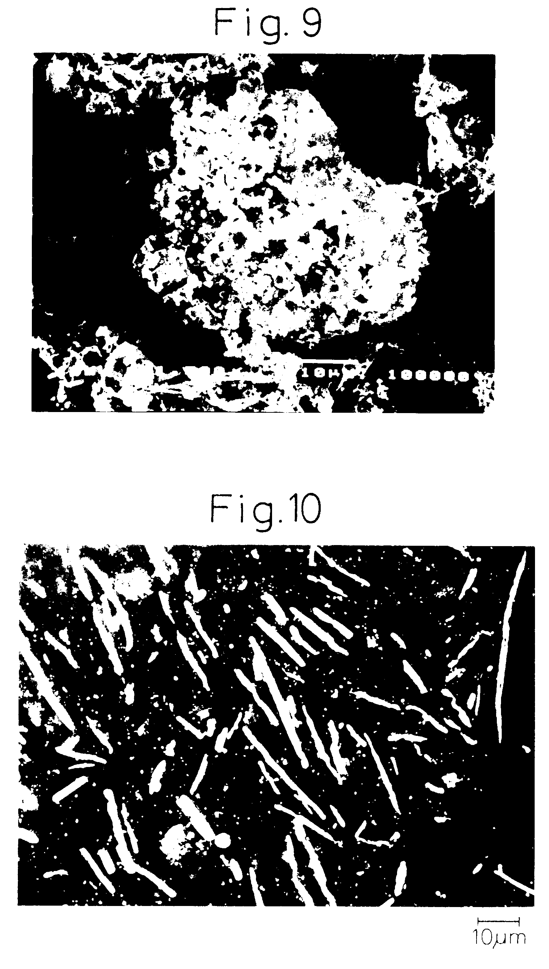

The mixture was milled, in ethanol, in a ball mill containing silicon nitride balls. Fig. 9 is a scanning electron micrograph of the mixed powder after the milling and Fig. 10 is an optical photomicrograph of the cross-section of the mixed powder after the milling. These photographs show that the Mo powder having an average particle size of 9.3 μm was deformed into a flaky shape and a mixed powder of glass and TiC was adhered onto the surface of the flaky Mo powder.

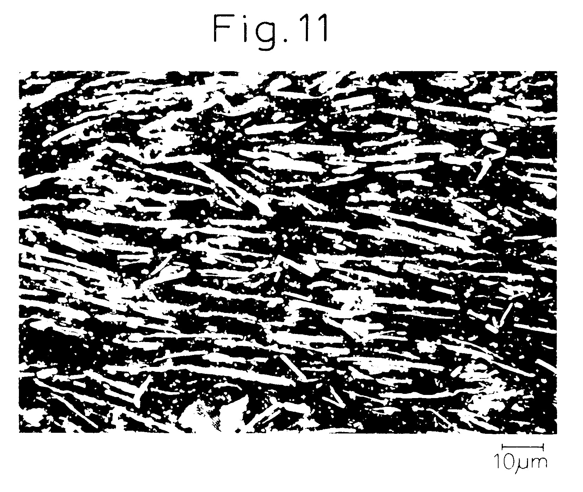

The mixed powder were charged into a graphite mold and sintered by hot pressing at 1000°C and 100 kg/cm$^2$ in argon for 1 hour. Fig. 11 shows a cross-section of the resultant sintered composite in the plane parallel to the pressing direction obtained by optical microscopy. It is seen that the reinforcing phase obtained from the Mo metal powder with a particle size of 9.3 μm is aligned two dimensionally and has a flaky shape satisfying d/t ≥ 3.

Samples of 3 × 4 × 40 mm were taken from the composite and subjected to a three-point bending test and an SEVNB method. The bending strength was 65 kg/mm$^2$ and the fracture toughness was 7 MPam$^{1/2}$.

For reference, the procedures as above were repeated except that the mixture used comprised only the MAS powder and the Mo powder and did not contain the TiC powder. The bending strength and the fracture toughness of the resultant sintered body were 43 kg/mm$^2$ and 6 MPam$^{1/2}$, respectively.

It is seen from comparison with Example 17 with Comparative Example 1 and the above reference that the toughness of the composite was improved significantly by the flaky metal reinforcing phase and the strength was improved by the other ceramic phase.

### Example 18

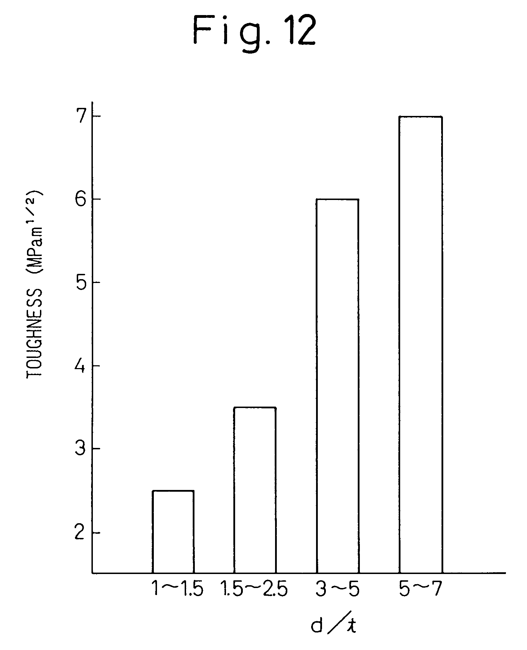

Mixtures having the same composition as in Example 17 were prepared and milled in different conditions so as to obtain different d/t, and then sintered under the same conditions as in Example 14. The fracture toughnesses of the resultant composites was measured and are shown in the following Table 3 and in Fig. 12. It is seen that the fracture toughness was significantly high when d/t ≥ 3 but, when d/t was 1.5 or less, the fracture toughness was only 2.5 MPam$^{1/2}$ which is a low improvement.

Table 3

| d/t | Fracture toughness |
|---|---|
| 1 to 1.5 | 2.5 MPam$^{1/2}$ |
| 1.5 to 2.5 | 3.5 MPam$^{1/2}$ |
| 3 to 5 | 6 MPam$^{1/2}$ |
| 5 to 7 | 7 MPam$^{1/2}$ |

### Example 19

An LAS I powder ($Li_2O$-$Al_2O_3$-$SiO_2$-MgO system particle size of 20 μm or less), a $ZrO_2$ powder (3Y sold by Tosoh Corp., specific surface area 16 m$^2$/g), and a Ta powder (M-40 sold by Showa Denko K.K., particle size 45 to 5 μm) were measured and mixed to 70:10:20 by volume.

The mixture was sintered and measured in the same manner as in Example 17.

The bending strength and the fracture toughness were measured to be 57 kg/mm$^2$ and 8.8 MPam$^{1/2}$ respectively.

### Example 20

An LAS III powder ($Li_2O$-$Al_2O_3$-$SiO_2$-MgO-$Nb_2O_5$ particle size of 20 μm or less), a ZrO powder (3Y sold by Tosoh Corp., specific surface area of 16 m$^2$/g) and a Nb powder (sold by Ishizu Pharmaceutics, particle size of 45 μm or less) were measured and mixed to 55:15:30 by volume and milled, in ethanol, in a ball mill containing silicon nitride balls.

The mixed powder was sintered in the same manner as in Example 17.

The bending strength and the fracture toughness measured as in Example 17 were found to be 70 kg/mm$^2$ and 11 MPam$^{1/2}$ respectively.

Example 21

A soda lime glass powder ($Na_2O$-$CaO$-$SiO_2$ system, particle size of 45 µm or less ), an alumina powder (AKP-30 sold by Sumitomo Chemical Co. Ltd., average particle size of 0.36 µm) and a Ni alloy powder (Ni17Cr6Al10.6Y, MA-90 sold by Showa Denko K.K., particle size of 45 to 10 µm) were measured and mixed to 55:15:30 by volume and milled, in ethanol, in a ball mill containing silicon nitride balls.

The mixed powder was charged into a graphite mold and sintered by hot pressing at 700°C and 100 kg/cm² in argon for 1 hour.

The bending strength and the fracture toughness measured as in Example 17 were found to be 60 kg/mm² and 8.7 MPam$^{1/2}$ respectively.

Example 22

A silicate glass powder ($SiO_2$ system particle size of 20 µm or less), a $ZrO_2$ powder (3Y sold by Tosoh Corp., specific surface area of 16 m²/g) and a Nb powder (Sold by Ishizu Pharmaceutics, Co. Ltd., particle size 45 µm or less) were measured and mixed to 60:10:30 by volume and milled, in ethanol., in a ball mill containing silicon nitride balls.

The mixed powder was charged into a graphite mold and sintered by hot pressing at 1600°C and 100 kg/cm² in argon for 1 hour.

The bending strength and the fracture toughness measured as in Example 17 were found to be 65 kg/mm² and 9 MPam$^{1/2}$ respectively.

Example 23

An aluminosilicate glass ($Al_2O_3$-$MgO$-$CaO$-$SiO_2$ system, particle size of 45 µm or less), a BN powder (MBN-010 sold by Mitsui Toatsu Chemical Co., Ltd., average particle size 1 µm) and a stainless steel powder (SUS316L sold by Sanyo Special Steels, particle size 45 µm or less) were measured and mixed to 60:10:30 by volume and milled, in ethanol, in a ball mill containing silicon nitride balls.

The mixed particles were charged into a graphite mold and sintered by hot pressing at 950°C and 100 kg/cm² in argon for 1 hour.

The bending strength and the fracture toughness measured as in Example 17 were found to be 60 kg/mm² and 8 MPam$^{1/2}$ respectively.

Example 24

A low melting point glass powder ($Al_2O_3$-$Li_2O$-$Na_2O$-$K_2O$-$P_2O_5$ system, particle size of 45 µm or less), a ZrO powder (3Y sold by Tosoh Corp., specific surface area of 16 m²/g) and an Al powder (sold by Sulzer Surface Tech Japan, particle size 90 to 38 µm) were measured and mixed to 65:15:20 by volume and milled, in ethanol, in a ball mill containing silicon nitride balls.

The mixed particles were charged into a graphite mold and sintered by hot pressing at 400°C and 100 kg/cm² in argon for 1 hour.

The bending strength and the fracture toughness measured as in Example 17 were found to be 45 kg/mm² and 7.3 MPam$^{1/2}$ respectively.

Example 25

An MAS powder ($MgO$-$Al_2O_3$-$SiO_2$ system, particle size of 20 µm or less) and a SiC whiskers (TWS-100 sold by Tokai Carbon Co., Ltd., diameter of 0.3 to 0.6 µm, length of 5 to 15 µm) and a Mo powder (M-60 sold by Showa Denko K.K., average particle size 53 to 10 µm) were measured and mixed to 70:10:20 by volume.

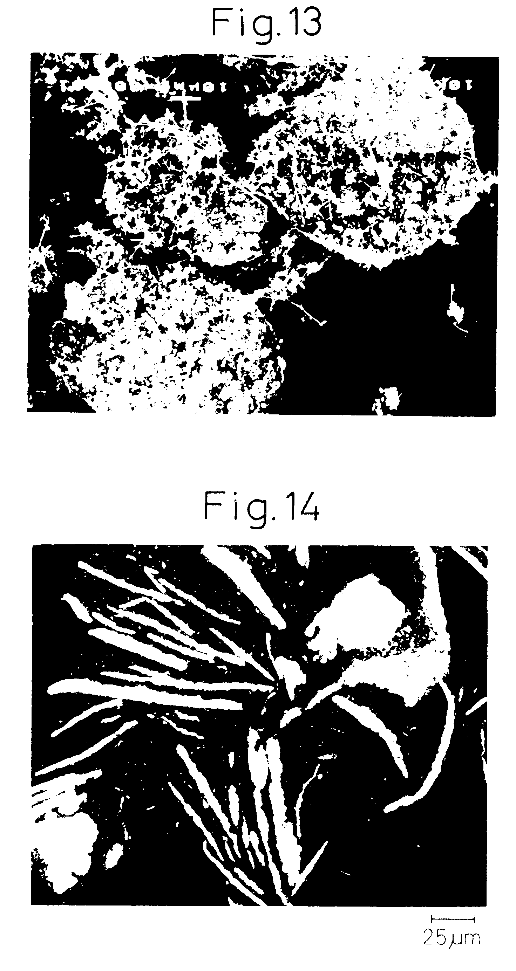

The mixture was milled, in ethanol, in a ball mill containing silicon nitride balls. Fig. 13 is a scanning electron micrograph of the mixed powder after the milling and Fig. 14 is an optical photomicrograph of the cross-section of the mixed powder after the milling. These photographs show that the Mo powder having a particle size of 53 to 10 µm was deformed into a flaky shape and the glass powder and the SiC whiskers were adhered onto the surface of the flaky Mo powder.

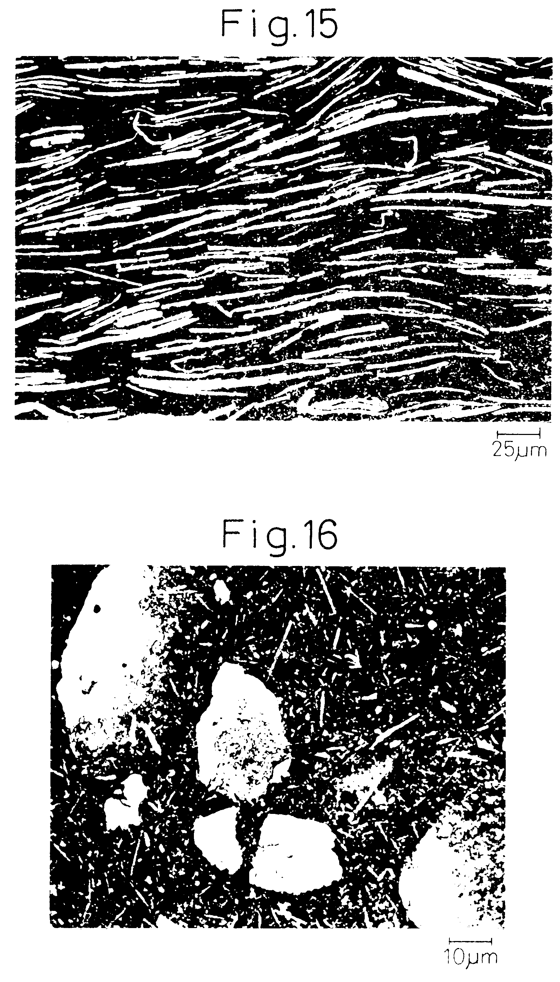

The mixed powder were charged into a graphite mold and sintered by hot pressing at 1200°C and 100 kg/cm² in argon for 1 hour. Fig. 15 shows a cross-section of the resultant sintered composite in the plane parallel to the pressing direction obtained by an optical microscopy. It is seen that the reinforcing phase obtained from the Mo metal powder with a particle size of 53 to 10 µm is aligned two dimensionally and has a flaky shape satisfying d/t $\geq$ 3. Fig. 16 shows a cross-section of the resultant sintered composite in the plane perpendicular to the pressing direction obtained by an optical microscopy. It is seen in Fig. 16 that the SiC whiskers are dispersed in the matrix.

Samples of 3 × 4 × 40 mm were taken from the composite and subjected to a three-point bending test and an SEVNB method. The bending strength was 53 kg/mm² and the fracture toughness was 8.2 MPam$^{1/2}$.

It is seen from comparison with Example 25 with Comparative Example 1 and Example 1 that the toughness of the composite was improved significantly by the flaky metal reinforcing phase and the strength and toughness were improved by the whiskers.

Example 26

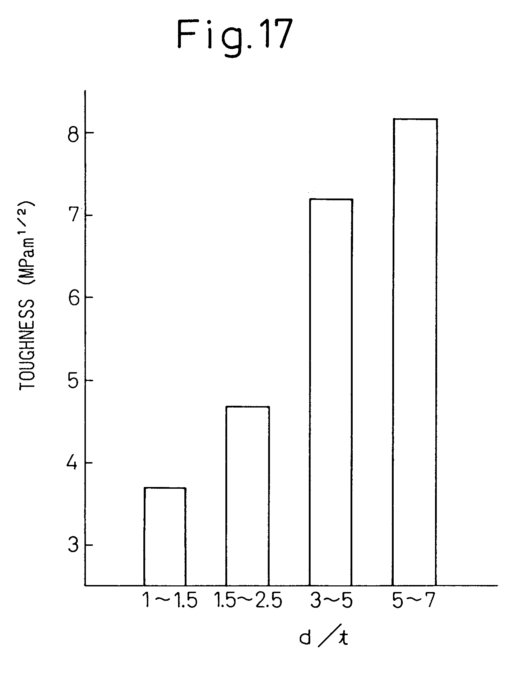

Mixtures having the same composition as in Example 25 were prepared and milled in different conditions so as to obtain different d/t, and then sintered under the same conditions as in Example 25. The fracture toughness of the resultant composites was measured and are shown in the following Table 4 and in Fig. 17. It is seen that the fracture toughness was significantly high when d/t $\geq$ 3 but, when d/t was 1.5 or less, the fracture toughness was only 3.7 MPam$^{1/2}$ which is low in improvement.

Table 4

| d/t | Fracture toughness |
|-----|--------------------|
| 1 to 1.5 | 3.7 MPam$^{1/2}$ |
| 1.5 to 2.5 | 4.7 MPam$^{1/2}$ |
| 3 to 5 | 7.2 MPam$^{1/2}$ |
| 5 to 7 | 8.2 MPam$^{1/2}$ |

Example 27

An LAS I powder (Li$_2$O-Al$_2$O$_3$-SiO$_2$-MgO system, particle size of 20 μm or less), Si$_3$N$_4$ whiskers (UBE-SN-WB sold by UBE Industries Ltd., diameter of about 0.5 μm, length of 20 to 30 μm), and a Ta powder (M-40 sold by Showa Denko K.K., particle size 45 to 5 μm) were measured and mixed to 70:10:20 by volume.

The mixed powder was sintered as in Example 25.

The bending strength and the fracture toughness were measured as in Example 25 to be 55 kg/mm$^2$ and 9 MPam$^{1/2}$ respectively.

Example 28

An LAS III powder (Li$_2$O-Al$_2$O$_3$-SiO$_2$-MgO-Nb$_2$O$_3$ system, particle size of 20 μm or less), Si$_3$N$_4$ whiskers (UBE-SN-WB sold by UBE industries Ltd., diameter of about 0.5 μm, length of 20 to 30 μm) and a Nb powder (sold by Ishizu Pharmaceutics Co. Ltd., particle size of 45 μm or less) were measured and mixed to 55:15:30 by volume and milled, in ethanol, in a ball mill containing silicon nitride balls.

The mixed powder was sintered and measured as in Example 25.

The bending strength and the fracture toughness were measured to be 70 kg/mm$^2$ and 11.3 MPam$^{1/2}$ respectively.

Example 29

A soda lime glass powder (Na$_2$O-CaO-SiO$_2$ system, particle size of 45 μm or less), SiC whiskers (TWS-100 sold by Tokai Carbon, diameter of 0.3 to 0.6 μm, length of 5 to 15 μm) and a Ni alloy powder (Ni16Cr6Al10.6Y, MA-90 sold by Showa Denko K.K., particle size of 45 to 10 μm) were measured and mixed to 55:15:30 by volume and milled, in ethanol, in a ball mill containing silicon nitride balls.

The mixed powder was charged into a graphite mold and sintered by hot pressing at 850°C and 100 kg/cm$^2$ in argon for 1 hour.

The bending strength and the fracture toughness measured as in Example 25 were found to be 55 kg/mm$^2$ and 9 MPam$^{1/2}$ respectively.

Example 30

A silicate glass powder (SiO$_2$ system particle size of 20 μm or less), an inorganic cut fiber comprised of Si, Ti, C and O (Tyranno fiber sold by UBE Industries Ltd., diameter of 11 μm, length of 1 to 2 mm) and a Nb powder (sold by Ishizu Pharmaceutics, particle size 45 μm or less) were measured and mixed to 60:10:30 by volume and milled, in ethanol, in a ball mill containing silicon nitride balls.

The mixed particles were charged into a graphite mold and sintered by hot pressing at 1600°C and 100 kg/cm$^2$ in argon for 1 hour.

The bending strength and the fracture toughness measured as in Example 25 were found to be 60 kg/mm$^2$ and 9.4 MPam$^{1/2}$ respectively.

Example 31

An aluminosilicate glass powder (Al$_2$O$_3$-MgO-CaO-SiO$_2$ system, particle size of 45 μm or less), SiC whiskers (TWS-100 sold by Tokai Carbon, Co., Ltd., diameter of 0.3 to 0.6 μm, length of 5 to 15 μm) and a stainless steel powder (SUS316L sold by Sanyo Special Steels Co. Ltd., particle size 45 μm or less) were measured and mixed to 60:10:30 by volume and milled, in ethanol., in a ball mill containing silicon nitride balls.

The mixed powder was charged into a graphite mold and sintered by hot pressing at 950°C and 100 kg/cm$^2$ in argon for 1 hour.

The bending strength and the fracture toughness measured as in Example 25 were found to be 58 kg/mm$^2$ and 8.5 MPam$^{1/2}$ respectively.

Example 32

A low melting point glass powder (Al$_2$O$_3$-Li$_2$O-Na$_2$O-K$_2$O-P$_2$O$_5$ system, particle size of 45 μm or less), Si$_3$N$_4$ whiskers (UBE-SN-WB sold by UBE Industries Ltd., diameter of about 0.5 μm length of 20 to 30 μm) and an Al powder (sold by Sulzer Surface Tech Japan, particle size 90 to 38 μm) were measured and mixed to 65:15:20 by volume and milled, in ethanol, in a ball mill containing silicon nitride balls.

The mixed particles were charged into a graphite mold and sintered by hot pressing at 400°C and 100 kg/cm$^2$ in argon for 1 hour.

The bending strength and the fracture toughness measured as in Example 25 were found to be 40 kg/mm$^2$ and 7.7 MPam$^{1/2}$ respectively.

**Claims**

1. A high toughness glass matrix composite wherein a matrix comprises an oxide-based glass and a reinforcing phase comprises a flaky ductile metal.

2. A high toughness glass matrix composite according to claim 1 further comprising a particulate metal as a reinforcing phase.

3. A high toughness glass matrix composite according to claim 1 further comprising a particulate ceramic as a reinforcing phase.

4. A high toughness glass matrix composite according to claim 1 further comprising a ceramic whisker material and/or an inorganic cut fiber as a reinforcing phase.

5. A high toughness glass matrix composite according to claim 1 further comprising as a reinforcing phase two or more of

    i) a particulate metal,
    ii) a particulate ceramic, and
    iii) a ceramic whisker material and/or an inorganic cut fiber.

6. A high toughness glass matrix composite according to claim 1 wherein said flaky ductile metal satisfies $d/t \geqq 3$ where d stands for a minimum size of said flaky ductile metal in a main plane thereof and t stands for a thickness of said flaky metal, and t is larger than 0.5 $\mu$m.

7. A high toughness glass matrix composite according to claim 1 wherein said oxide-based glass comprises at least one glass selected from the group consisting of crystallized glasses, common glasses, low melting point glasses and oxynitride glasses.

8. A high toughness glass matrix composite according to claim 1 wherein said composite contains 2 to 60% by volume of said flaky ductile metal and said flaky ductile metal is at least one metal selected from the group consisting of Ti, V, Cr, Zr, Nb, Mo, Hf, Ta, W, Fe, Ni, Co, Cu, Al, Mg, Zn and alloys thereof, stainless steel and super alloys.

9. A high toughness glass matrix composite according to claim 2 wherein said particulate metal takes up 2 to 40% by volume of said composite and is at least one metal selected from the group consisting of Ti, V, Cr, Zr, Nb, Mo, Hf, Ta, W, Fe, Ni, Co, Cu, Al, Mg, Zn and alloys thereof, stainless steel and super alloys.

10. A high toughness glass matrix composite according to claim 3 wherein said particulate ceramic takes up 2 to 40% by volume of said composite and is at least one ceramic selected from the group consisting of oxides, nitrides, carbides, borates, silicides and carbonitrides of Ti, V, Cr, Zr, Nb, Mo, Hf, Ta, W, Fe, Ni, Co, Al, Y, Si and B.

11. A high toughness glass matrix composite according to claim 4 wherein said ceramic whisker material and/or an inorganic cut fiber takes up 2 to 40% by volume of said composite, said ceramic whisker is at least one ceramic selected from the group consisting of $Si_3N_4$, SiC, TiC, graphite, potassium titanium, aluminum borate, ZnO, MgO, magnesium borate, $TiB_2$ and mullite, and said inorganic cut fiber is at least one inorganic material selected from the group consisting of alumina, aluminosilica, silica, zirconia, silicon nitride, silicon carbide, titania and Si-Ti-C-O.

12. A process for preparing a high toughness glass matrix composite comprising the steps of:
    providing a glass composite powder comprising an oxide-based glass powder adhered onto a surface of flaky ductile metal powder,
    forming said glass composite powder into a shaped body and
    sintering the resultant shaped body at a temperature of 200 to 1800°C to form a sintered glass matrix composite comprising the oxide-based glass as a matrix and the flaky ductile metal as a reinforcing phase.

13. A process according to claim 12 wherein said glass composite powder further comprises a particulate metal powder adhered onto said surface of the flaky ductile metal powder.

14. A process according to claim 12 wherein said glass composite powder further comprises a particulate ceramic powder adhered onto said surface of the flaky ductile metal powder.

15. A process according to claim 12 wherein said glass composite powder further comprises a ceramic whisker material and/or an inorganic cut fiber adhered onto said surface of flaky ductile metal powder.

16. A process according to claim 12 wherein said composite powder is prepared by mixing ductile metal powder having a particle size of 1 to 200 $\mu$m with an oxide-based glass powder having a particle size of 50 $\mu$m or less.

17. A process according to claim 16 wherein said composite powder is prepared by mixing said ductile metal powder and said oxide-based glass powder together with a particulate metal powder having a particle size of 2 $\mu$m or less.

18. A process according to claim 16 wherein said composite powder is separated by mixing said ductile metal powder and said oxide-based glass powder together with a particulate ceramic powder having a particle size of 2 $\mu$m or less.

19. A process according to claim 16 wherein said composite powder is separated by mixing said ductile metal powder and said oxide-based glass powder together with a ceramic whisker material and/or an inorganic cut fiber having a length of 5 mm or less.

20. A process according to claim 12 wherein said sintering is conducted at a temperature lower than the melting point of said flaky ductile metal powder.

21. A glass composite powder comprising an oxide-based glass powder adhered onto a surface of a flaky ductile metal powder.

22. A glass composite powder according to claim 21 wherein at least one of a particulate metal powder, a particulate ceramic powder, a ceramic whisker material and an inorganic cut fiber is further adhered onto the surface of said flaky ductile metal powder.

23. A glass composite powder according to claim 21 wherein said flaky ductile metal powder satisfy $d/t \geq 3$ where d stands for a minimum size of said flaky ductile metal powder in a main plane thereof and t stands for a thickness of said flaky ductile metal powder, and t is larger than 0.5 $\mu$m.

24. A glass composite powder according to claim 23 wherein said oxide ceramic powder has a particle size of 50 $\mu$m or less.

25. A glass composite powder according to claim 22 wherein said particulate metal powder and/or particulate ceramic powder have a particle size of 2 $\mu$m or less.

26. A glass composite powder according to claim 22 wherein said inorganic cut fiber has a length of 5 mm or less.

27. A process for preparing a glass composite powder, comprising milling a ductile metal powder with an oxide-based glass powder to deform said ductile metal powder into a flaky shape and obtain a composite glass powder in which the oxide-based glass powder is adhered onto a surface of the flaky ductile metal powder.

28. A process according to claim 27 wherein at least one of a particulate metal powder, a particulate ceramic powder, a ceramic whisker material and an inorganic cut fiber is also milled together to obtain a composite glass powder in which the oxide-based glass powder and said at least one of particulate metal powder, particulate ceramic powder, ceramic whisker material and inorganic cut fiber are adhered onto the surface of the flaky ductile metal powder.

# Fig.1

# Fig.2

25 μm

# Fig. 3

25μm

# Fig. 4

## Fig. 5

## Fig.6

10μm

# Fig.7

10μm

# Fig. 8

# Fig. 9

# Fig.10

10μm

# Fig. 11

10μm

# Fig. 12

## Fig.13

## Fig.14

25 μm

# Fig. 15

25μm

# Fig. 16

10μm

# Fig.17

European Patent Office

**EUROPEAN SEARCH REPORT**

Application Number

EP 95 11 8751

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI Section Ch, Week 8604 Derwent Publications Ltd., London, GB; Class L02, AN 86-024653 & JP-A-60 246 274 ( IGAMI H) , 5 December 1985 * abstract * | 1,3,7,8, 10,12, 14,21,22 | C03C14/00 |
| X | DATABASE WPI Section Ch, Week 8723 Derwent Publications Ltd., London, GB; Class L01, AN 87-161819 & SU-A-1 265 162 ( BUILD PHYS RES INST) , 23 October 1986 * abstract * | 1,7,8 | |
| X | US-A-5 304 517 (CASEY) 19 April 1994 * abstract * | 1,7,8 | |
| X | WO-A-92 00925 (COOKSON GROUP PLC) 23 January 1992 * page 7, line 27 - page 8, line 6 * | 1,7,8 | |
| A | G. PIATTI (EDITOR)  'Advances in Composite Materials' 1978 , APPLIED SCIENCES PUBLISHERS, LTD. , LONDON J. Rexer: "Composites with Two-Dimensional Planar Reinforcements", pages 131 - 152 * page 131 - page 133 * | 1-11 | TECHNICAL FIELDS SEARCHED     (Int.Cl.6) C03C |
| A | DE-A-30 01 096 (SINTERMETALLWERK KREBSÖGE GMBH) 23 July 1981 * page 4, paragraph 2 - paragraph 3 * | 1,12 | |
| A | US-A-4 748 136 (MAHULIKAR) 31 May 1988 * column 3, line 48 - column 8, line 49 * | 1-11 | |

The present search report has been drawn up for all claims

| Place of search | Date of completion of the search | Examiner |
|---|---|---|
| THE HAGUE | 7 March 1996 | Van Bommel, L |

EPO FORM 1503 03.82 (P04C01)